Europäisches Patentamt

European Patent Office

Office européen des brevets

(19)

(11) Veröffentlichungsnummer : **0 138 121**
**B1**

(12) **EUROPÄISCHE PATENTSCHRIFT**

(45) Veröffentlichungstag der Patentschrift :
23.03.88

(21) Anmeldenummer : 84111586.8

(22) Anmeldetag : 28.09.84

(51) Int. Cl.⁴ : **C 08 L 27/06**// B42D15/02
,(C08L27/06, 55:02, 1:02,
33:12)

(54) Formmasse auf der Basis von Vinylchloridpolymerisaten und Verfahren zur Herstellung von Folien aus diesen Formmassen für die Bereitung von fälschungssicheren Wertpapieren.

(30) Priorität : 08.10.83 DE 3336647

(43) Veröffentlichungstag der Anmeldung :
24.04.85 Patentblatt 85/17

(45) Bekanntmachung des Hinweises auf die Patenterteilung : 23.03.88 Patentblatt 88/12

(84) Benannte Vertragsstaaten :
CH DE FR GB IT LI NL

(56) Entgegenhaltungen :
GB-A- 2 111 910
CHEMICAL ABSTRACTS, Band 91, Nr. 12, 17. September 1979, Seite 40, Nr. 92511x, Columbus, Ohio, US

(73) Patentinhaber : HOECHST AKTIENGESELLSCHAFT
Postfach 80 03 20
D-6230 Frankfurt am Main 80 (DE)

(72) Erfinder : Wottka, Bernhard
Billerstrasse 8
D-8261 Kastl (DE)
Erfinder : Weindl, Alfred
Karl-Bosch-Strasse 5
D-8262 Altötting (DE)

**Beschreibung**

Die Erfindung betrifft eine Formmasse auf der Basis von Vinylchlorid-Polymerisaten zur Herstellung von Folien für die Bereitung von fälschungssicheren Wertpapieren, wobei die Fälschungssicherheit darin besteht, daß die hergestellten Wertpapiere nur mittels eines Lasers personalisierbar sind. Die Erfindung betrifft ferner ein Verfahren zur Herstellung dieser Folien.

Wertpapiere, wie Identitätskarten, Kreditkarten und Scheckkarten, sollen so beschaffen sein, daß es nicht oder nur sehr schwer möglich ist, gefälschte oder verfälschte Stücke herzustellen.

Bezüglich des Aufbaues stellen die bekannten Wertpapiere in der Regel einen Verbund aus mindestens 2, vorzugsweise 3 Schichten (Folien) aus gleichen oder verschiedenen Kunststoffen oder aus Kunststoff und vorzugsweise Papier oder Metall dar. So sind bekanntlich derzeit Kreditkarten im Gebrauch, die aus 3 Schichten aufgebaut sind, wobei die beiden Außenschichten (Schutzschichten) aus einer transparenten oder glasklaren Polyvinylchlorid-Folie und die innere Schicht (der Kern) aus Papier oder einer gedeckt eingefärbten Polyvinylchlorid-Folie besteht.

Die derzeit gebräuchliche Papierkern-Kreditkarte ist zwar mit einem Laser personalisierbar, das heißt beschriftbar, und damit in hohem Maße fälschungssicher (infolge der teuren und komplizierten technischen Einrichtung, die zur Laser-Personalisierung erforderlich ist), sie hat aber auch eine Reihe von Nachteilen, wie geringe Dimensionsstabilität und damit eine eingeschränkte Automatengängigkeit, relativ hohe Knick- und Bruchempfindlichkeit, geringe Lebensdauer und relativ leichte Delaminierbarkeit. Darüber hinaus wird die Schriftschärfe als nicht zufriedenstellend bewertet.

Die derzeit gebräuchlichen Kreditkarten aux Kunststoff- Folien als Kern und als Schutzschichten (Vollkunststoff-Kreditkarten) weisen im Vergleich zu der Papierkern-Kreditkarte offensichtlich mehrere Vorteile auf, sie besitzen aber den folgenden beträchtlichen Nachteil : Die Personalisierung (Beschriftung) erfolgt durch Einprägen (embossing), was keine große Fälschungssicherheit gewährleistet. Die Fälschungssicherheit läßt sich auch nicht wesentlich durch die bekannten Maßnahmen, wie Einbau von Magnetstreifen oder elektrophotographischen Abbildungen, erhöhen.

Die Formmassen zur Herstellung der Folien, die zur Bereitung der oben beschriebenen Kreditkarten benützt werden, bestehen im wesentlichen aus Vinylchlorid-Polymerisaten als Hauptbestandteil, Methylmethacrylat-Butadien-Styrol-Polymeren oder Acrylnitril-Butadien-Styrol-Polymeren als Modifizierungsmittel zur Verbesserung der Schlagzähigkeit der Vinylchlorid-Polymerisate, üblichen Wärmestabilisatoren und Gleitmitteln für Vinylchlorid-Polymerisate und gegebenenfalls Farbstoffe und Füllstoffe, wie Titandioxid und Kreide. Diese Formmassen sind relativ gut kalandrier- und extrudierbar. Die erhaltenen Kalanderfolien und Extruderfolien weisen auch eine im Hinblick auf die Herstellung von Wertpapieren zufriedenstellende Oberflächenbeschaffenheit auf. Die damit bereiteten, an sich vorteilhaften Vollkunststoff-Wertpapiere besitzen jedoch, wie oben bereits beschrieben, eine relativ geringe Fälschungssicherheit.

Kunststoff-Folien für die Herstellung von Wertpapieren sollen neben einer hohen Fälschungssicherheit insbesondere auch eine hohe Verarbeitungsgeschwindigkeit (Maschinengeschwindigkeit) bei der Herstellung der Wertpapiere gewährleisten. Zur Erreichung einer hohen Verarbeitungsgeschwindigkeit müssen sie eine gute Oberflächenbeschaffenheit aufweisen, das ist eine Oberfläche, die insbesondere frei ist von sogenannten Aufbrüchen. Die Oberflächenaufbrüche in der Folie führen nämlich zu Störungen, beispielsweise beim Bedrucken der Folie und beim Verpressen der Folienzuschnitte zu den gewünschten Verbunden.

Aufgabe der Erfindung ist es daher, eine Formmasse auf der Basis von Vinylchloridpolymerisaten zu schaffen, die sich durch eine gute Kalandrier- und Extrudierbarkeit, vorzugsweise Kalandrierbarkeit, auszeichnet, und Folien liefert, die sich besonders vorteilhaft für die Herstellung von Wertpapieren eignen, weil sie die geforderte Oberflächenbeschaffenheit aufweisen und die hergestellten Wertpapiere nur mittels eines Lasers personalisierbar sind.

Die erfindungsgemäße Formmasse auf der Basis von Vinylchlorid-Polymerisaten besteht aus

A) 5 bis 20 Gew.-% Schlagzähmodifizierungsmittel für Vinylchloridpolymerisate, ausgewählt aus der Gruppe bestehend aus Acrylnitril-Butadien-Styrol-Polymeren, Methylmethacrylat-Butadien-Styrol-Polymeren, Methylmethacrylat-Acrylnitril-Butadien-Styrol-Polymeren und chloriertem Polyethylen,

B) 0,5 bis 25 Gew.-% pulverisierter reiner Cellulose, die einen durchschnittlichen Polymerisationsgrad von 300 bis 1 000 besitzt und deren Teilchen einen Durchmesser von maximal 0,09 mm aufweisen,

C) 1 bis 5 Gew.-% Polymethylmethacrylat, und

D) Vinylchloridhomopolymeren und/oder Vinylchloridcopolymeren mit mindestens 70 Gew.-% polymerisierten Vinylchlorid-Einheiten in einer solchen Menge, daß die Gewichtssumme aus A), B), C) und D) 100 Gew.-% ergibt, und zusätzlich

E) einer wirksamen Menge Gleitmittel und Wärmestabilisator für Vinylchlorid-Polymerisate.

Es war überraschend, daß die erfindungsgemäße Formmasse trotz des Gehaltes an pulverisierter Cellulose gut extrudierbar und auch kalandrierbar ist, und Folien liefert, die insbesondere jene Eigenschaften aufweisen, wie sie für die Herstellung von Wertpapieren verschiedenster Art gewünscht werden. Aus der deutschen Auslegeschrift 25 14 691 und den US-Patentschriften 4 104 207 und 4 250 064 sind zwar Formmassen auf der Basis von Vinylchlorid-Polymerisaten mit einem Gehalt an Cellulose bekannt. Diese Formmassen unterscheiden sich jedoch von den erfindungsgemäßen nicht nur hinsichtlich ihrer qualitativen und quantitativen Zusammensetzung, sondern auch hinsichtlich der Art der Cellulose. Die bekannten Formmassen sind ferner im Vergleich zu den neuen für ganz andere Zwecke bestimmt.

Die erfindungsgemäß einzusetzenden Schlagzähmodifizierungsmittel für Polyvinylchlorid (Komponente A) sind Polymerisate aus Acrylnitril, Butadien und Styrol (ABS), Methylmethacrylat, Butadien und Styrol (MBS), Methylmethacrylat, Acrylnitril, Butadien und Styrol (MABS) und chloriertes Polyethylen (CPE). Die ABS-, MBS- und MABS-Polymeren weisen einen Butadiengehalt von jeweils vorzugsweise mindestens 35 Gew.-%, bezogen auf das Gesamtpolymerisat, auf. Als besonders geeignet erwiesen haben sich ABS-Polymere, deren Gehalt an butadien 40 bis 70 Gew.-%, an Styrol 20 bis 40 Gew.-% und an Acrylnitril 10 bis 25 Gew.-%, jeweils bezogen auf das Gesamtpolymerisat, beträgt ; MBS-Polymere, deren Gehalt an Butadien 40 bis 70 Gew.-%, an Styrol 10 bis 20 Gew.-% und an Methylmethacrylat 10 bis 50 Gew.-%, jeweils bezogen auf das Gesamtpolymerisat, beträgt ; MABS-Polymere, deren Gehalt an Butadien 40 bis 60 Gew.-%, an Styrol 25 bis 40 Gew.-%, an Methylmethacrylat 15 bis 30 Gew.-% und an Acrilnitril weniger als 10 Gew.-% jeweils bezogen auf das Gesamtpolymerisat, beträgt.

Bei dem chlorierten Polyethylen als Schlagzähmodifizierungsmittel für Polyvinylchlorid handelt es sich um Chlorierungsprodukte von Polyethylen oder von Mischpolymerisaten des Ethylens mit geringen Anteilen, vorzugsweise mit höchstens 1 bis 5 Mol-% Propen oder Buten-(1). Das Ethylenpolymerisat, das chloriert ist, kann im Niederdruck- oder Hochdruckverfahren hergestellt worden sein. Chloriertes Niederdruck-Polyethylen ist bevorzugt. Das mittlere Molekulargewicht des chlorierten Polyethylens beträgt zweckmäßigerweise 10 000 bis 100 000, vorzugsweise 20 000 bis 50 000 (berechnet aus dem Chlorgehalt und dem gelchromatographisch bestimmten Molekulargewicht des Ausgangspolyethylens ; vgl. Zeitschrift « Makromolekulare Chemie », Band 26, Jahr 1958, Seiten 96 bis 101, Verlag Dr. Alfred Hüthig, Heidelberg, Bundesrepublik Deutschland). Der Gehalt an Chlor beträgt zweckmäßigerweise 20 bis 50 Gew.-%, vorzugsweise 30 bis 42 Gew.-%, bezogen auf das chlorierte Polyethylen.

Die Menge an Schlagzähmodifizierungsmittel beträgt vorzugsweise 10 bis 15 Gew.-%, bezogen auf das Gewicht der Formmasse aus den Komponenten A), B), C) und D).

Die erfindungsgemäß einzusetzende Cellulose (Komponente B) ist eine pulverisierte reine Cellulose, die einen durchschnittlichen Polymerisationsgrad von 300 bis 1 000, vorzugsweise 400 bis 950, besitzt, und deren Teilchen einen Durchmesser von maximal 0,09 mm, vorzugsweise 0,02 bis 0,08 mm, aufweisen.

Mit dem Wort « rein » soll ausgedrückt werden daß die erfindungsgemäß einzusetzende Cellulose im wesentlichen aus D-Glucopyranosemolekeln mit β(1.4)-glucosidischer Verknüpfung besteht, also keine chemisch modifizierte oder chemisch veredelte Cellulose wie Alkylcellulose, Carboxyalkylcellulose oder Kunstseide ist. Die erfindungsgemäß ausgewählte Cellulose ist also eine von Lignin und anderen Begleitstoffen befreite, gereinigte, chemisch nicht modifizierte oder veredelte, pulverförmige Cellulose pflanzlicher Herkunft (insbesondere Holz). Derartige Cellulosen sind im Handel erhältlich, beispielsweise unter dem Namen ARBOCEL®-Cellulose (® = eingetragenes Warenzeichen von J. Rettenmaier und Söhne, Füllstoff-Fabriken in Holzmühle, Bundesrepublik Deutschland). Die Menge an Cellulose beträgt in dem Falle, daß die hergestellten Folien glasklar oder transparent sein sollen, 0,5 bis 5 Gew.-%, vorzugsweise 1 bis 3 Gew.-%, bezogen auf das Gewicht der Formmasse aus den Komponenten A), B), C) und D). Sollen die Folien dagegen mattgedeckt sein, beträgt die Menge an Cellulose 8 bis 25 Gew.-%, vorzugsweise 10 bis 16 Gew.-%, bezogen auf das Gewicht der Formmasse aus den Komponenten A), B), C) und D).

Das erfindungsgemäß einzusetzende Polymethylmethacrylat (Komponente C) ist ein Polymerisat des Esters aus Methacrylsäure und Methanol (Methylmethacrylat). Der Polymerisationsgrad des Polymethylmethacrylats kann in weiten Grenzen variieren. Bevorzugt sind Polymethylmethacrylate mit einer relativen Viskosität von 1,2 bis 20, vorzugsweise 4 bis 10 (gemessen in einer 1 gew.-%igen Lösung in Chloroform mittels des Ubbelohde-Viskosimeters mit der Kapillare Oa).

Die Menge an Polymethylmethacrylat in der erfindungsgemäßen Formmasse beträgt vorzugsweise 1,5 bis 3 Gew.-%, bezogen auf das Gewicht der Formmasse aus den Komponenten A), B), C) und D).

Die erfindungsgemäß einzusetzenden Vinylchlorid-Polymerisate oder Polyvinylchloride (Komponente D) können Homopolymere und/oder Copolymere des Vinylchlorids sein. In den Copolymeren beträgt der Anteil an polymerisierten Vinylchlorid-Einheiten mindestens 70 Gew.-%, vorzugsweise mindestens 85 Gew.-%, bezogen auf das Gewicht des Polymerisates.

Zur Copolymerisation von Vinylchlorid sind besonders die folgenden Monomeren geeignet : Olefine wie Ethylen und Propylen ; Vinylester von Carbonsäuren mit 2 bis 4 C-Atomen wie Vinylacetat und Vinylpropionat ; Vinylhalogenide wie Vinylidenchlorid ; ungesättigte Saüren wie Malein-, Fumar-, Acryl-, Methacrylsäure und deren Ester mit Alkoholen mit 1 bis 10 C-Atomen ; Acrylnitril ; Styrol ; und Cyclohexylmaleinimid.

Zur Pfropfpolymerisation von Vinylchlorid sind besonders elastomere Polymerisate geeignet, die durch Polymerisation von einem oder mehreren folgender Monomerer erhalten werden : Diene wie Butadien und Cyclopentadien ; Olefine wie Ethylen und Propylen ; Styrol ; ungesättigte Säuren wie Acryl-

3

und Methacrylsäure sowie deren Ester mit Alkoholen mit 1 bis 10 C-Atomen ; und Acrylnitril.

Bevorzugte Vinylchloridpolymerisate sind Homopolymere des Vinylchlorids und Copolymere des Vinylchlorids mit Vinylacetat. Diese Polymerisate werden zweckmäßigerweise nach dem Masse-, Suspensions- oder emulgatorarmen (Emulgator weniger als 3 Gew.-%, bezogen auf das Polymerisat) Emulsions-Polymerisationsverfahren hergestellt.

Die K-Werte (DIN 53 726) der Vinylchloridpolymerisate betragen zweckmäßigerweise 50 bis 80, vorzugsweise 54 bis 67.

Die Menge an Polyvinylchlorid, dem Hauptbestandteil der erfindungsgemäßen Formmassen, beträgt vorzugsweise mindestens 68 Gew.-%, bezogen auf die Gewichtssumme der Komponenten A), B), C) und D), woraus sich unter Einbeziehung der angegebenen bevorzugten Mengen der Komponente A), B) und C) für Polyvinylchlorid der bevorzugte Mengenbereich von 68 bis 87,5 Gew.-% ergibt.

Als Wärmestabilisatoren für die erfindungsgemäßen Formmassen auf Basis von Polyvinylchlorid (Komponente E) werden vorzugsweise die üblichen Organozinnschwefel-Verbindungen, Aminocrotonsäureester, Harnstoff- und Thioharnstoffderivate und/oder Salze der Erdalkalimetalle und des Zinks eingesetzt. Bevorzugt sind die Organozinnschwefel-Stabilisatoren wie Dimethylzinn-, Dibutylzinn- und Dioctylzinn-bis-2-ethylhexylthioglykolat. Die wirksame Menge an Stabilisator beträgt üblicherweise 0,5 bis 3 Gew.-%, vorzugsweise 1 bis 2,0 Gew.-%, bezogen auf die Gewichtsmenge an Polyvinylchlorid (Komponente D).

Als Gleitmittel (Komponente E) werden vorzugsweise die folgenden üblichen Verbindungen eingesetzt : Stearinsäure, Montansäure, Glycerinester wie Glycerinmonooleat, bis-Palmitoyl-ethylendiamin, bis-Stearoyl-ethylendiamin, Montansäureester von Ethandiol oder 1,3-Butandiol, gegebenenfalls teilweise werseift. Die wirksame Menge an Gleitmittel beträgt üblicherweise 0,1 bis 2,5 Gew.-%, vorzugsweise 0,5 bis 1,5 Gew.-%, bezogen auf die Gewichtsmenge an Polyvinylchlorid (Komponente D).

Die erfindungsgemäßen Formmassen mit einem bestimmten Gehalt an pulverisierter reiner Cellulose enthalten gegebenenfalls weitere Füllstoffe, vorzugsweise Titandioxid und Kreide (Calciumcarbonat), in einer Menge von 1 bis 15 Gew.-%, vorzugsweise 3 bis 10 Gew.-%, bezogen auf die Gewichtsmenge an Polyvinylchlorid (Komponente D). Bei der Kreide kann es sich um behandelte (gecoatete) oder unbehandelte Kreide handeln. Die Teilchen der pulverförmigen Füllstoffe, Kreide und Titandioxid, weisen im allgemeinen einen Durchmesser von 0,001 bis 0,015 mm, vorzugsweise 0,005 bis 0,008 mm, auf.

Die Herstellung der erfindungsgemäßen Formmassen erfolgt durch Zusammenmischen der einzelnen Komponenten, was zweckmäßigerweise in einem in der Kunststoffverarbeitung üblichen Mischer durchgeführt wird.

Die Verarbeitung der erfindungsgemäßen Formmassen zu Folien erfolgt durch Extrusion und vorzugsweise durch Kalandrierung. Die Kalandrierung wird vorzugsweise derart durchgeführt, daß die Formmasse a) bei einer Temperatur von 140 bis 180°C, vorzugsweise 150 bis 170°C, vorgeliert wird, zweckmäßigerweise in einem Kneter und/oder auf einem aus mindestens zwei Walzen bestehenden Walzwerk, und b) das vorgelierte Material auf einem vorzugsweise aus vier oder fünf Walzen bestehenden Kalander bei einer Walzentemperatur von 180 bis 225°C, vorzugsweise 190 bis 210°C, zur Folie kalandriert wird, wobei die Walzen im einzelnen derart erhitzt sind, daß die erste und die letzte Walze etwa die gleiche Temperatur und die dazwischenliegenden Walzen um 5 bis 10°C höhere Temperaturen als die anderen beiden Walzen besitzen (Hochtemperatur-Kalandrierverfahren). Die kalandrierte Folie wird von der letzten Kalanderwalze abgezogen, mit Hilfe von Kühlwalzen gekühlt und in der Regel einer Aufwickeleinrichtung zugeführt.

Die Dicke der Folie beträgt im allgemeinen 0,1 bis 1,0 mm, vorzugsweise 0,2 bis 0,7 mm.

Die erfindungsgemäßen Formmassen sind gut kalandrierbar und extrudierbar. Sie lassen sich ohne Schwierigkeiten auch mit relativ hoher Geschwindigkeit kalandrieren. Die Kalanderfolien weisen eine gute Oberflächenbeschaffenheit auf. Ihre Oberfläche ist frei von Aufbrüchen und sonstigen Fehlstellen (Stippen). Diese Folien eignen sich besonders gut zur Herstellung von Wertpapieren, beispielsweise Kreditkarten. Wie oben bereits erwähnt, bestehen Kreditkarten im allgemeinen aus einer Kernfolie, die beidseitig mit einer Schutzfolie (Overlay-Folie) bedeckt ist. Die Kernfolie sollte matt und gut bedruckbar sein. Bevorzugte erfindungsgemäße Formmassen zur Herstellung von Kernfolien bestehen im wesentlichen aus 5 bis 20 Gew.-%, vorzugsweise 10 bis 15 Gew.-%, von der Komponente A), 8 bis 25 Gew.-%, vorzugsweise 10 bis 16 Gew.-%, von der Komponente B), 1 bis 5 Gew.-% vorzugsweise 1,5 bis 3 Gew.-%, von der Komponente C), Vinylchloridpolymerisat als Komponente D), Gleitmittel und Wärmestabilisatoren als Komponente E) und zusätzlich Füllstoffen, ausgewählt aus der Gruppe Titandioxid und Kreide in einer Menge von 1 bis 15 Gew.%, vorzugsweise 3 bis 10 Gew.-%, als Komponente F).

Es ist überraschend, daß gerade durch die erfindungsgemäße Füllstoffkombination aus Cellulose, Kreide und/oder Titandioxid eine Formmasse vorliegt, die gut kalandrierbar ist und Folien liefert, welche auch hinsichtlich Mattigkeit und Bedruckbarkeit besonders gut sind. Die Schutzfolie sollte glasklar oder zumindest transparent sein. Bevorzugte erfindungsgemäße Formmassen zur Herstellung solcher Folien bestehen im wesentlichen aus 5 bis 20 Gew.-%, vorzugsweise 10 bis 15 Gew.-% von der Komponente A), 0,5 bis 5 Gew.-%, vorzugsweise 1 bis 3 Gew.-%, von der Komponente B), 1 bis 5 Gew.-%, vorzugsweise 1,5 bis 3 Gew.-% von der Komponente C), Vinylchloridpolymerisat als Komponente D) und Gleitmittel und Wärmestabilisator als Komponente E).

Die beschriebenen Kernfolien und Schutzfolien lassen sich leicht zu Verbunden zusammenfügen,

weil diese Folien auch gut verpreßbar sind (Preßtemperatur 120 bis 150°C). Die so erhaltenen Wertpapiere, wie Kreditkarten, sind äußerst fälschungssicher, weil sie sich nur mittels eines teuren Lasergerätes personalisieren lassen (durch die Beaufschlagung mit einem Laser schwärzt sich infolge Verbrennung die in der Folie enthaltene Cellulose). Wie ersichtlich, enthalten auch die Schutzfolien eines solchen Verbundes erfindungsgemäß vorgeschlagene Cellulose. Es wurde nämlich festgestellt, daß reine Cellulose auch einen positiven, zusätzlichen Einfluß auf die Belaserbarkeit und damit auf die Schriftschärfe hat, wenn geringe Mengen davon auch in der Schutzfolie (Overlay-Folie) eingesetzt werden.

Die aus den erfindungsgemäßen Formmassen hergestellten Kalanderfolien weisen also alle jene wertvollen Eigenschaften auf, die zur Bereitung von Wertpapieren gewünscht werden, und die bereiteten Wertpapiere zeichnen sich durch eine große Fälschungssicherheit aus.

Die Erfindung wird nun an Beispielen noch näher erläutert :

### Beispiele 1 bis 8 und Vergleichsbeispiele 1 und 2

Die Beispiele und Vergleichsbeispiele sind in der nachstehenden Tabelle zusammengefaßt.

Die angeführten Komponenten wurden in einem in der Kunststoffverarbeitung üblichen Schnellmischer gemischt und die Mischungen in einem Extruder bei Temperaturen von 150 bis 170°C vorgeliert. Die Kalandrierung der einzelnen vorgelierten Formmassen erfolgte auf einem Kalander mit 4 Walzen. Die Temperatur der Kalanderwalzen betrug je nach Formmasse 190 bis 210°C. Die Dicke der einzelnen Folien war jeweils 0,2 mm.

Die Kalandrierbarkeit der Formmassen, die Oberflächenbeschaffenheit der Folie und die Schriftschärfe von mittels Laser personalisierten Kreditkarten, die aus den Folien hergestellt worden waren, wurden mit den Noten 1 bis 3 bewertet : 1 = ungenügend, 2 = gut, 3 = sehr gut.

An den Folien wurde ferner der Glanz der beiden Folienoberflächen nach ASTM D 523 sowie die Zugfestigkeit und die Reißdehnung nach DIN 53 455 jeweils in Längsrichtung (1) und Querrichtung (q) gemessen. Die Ergebnisse stehen in der Tabelle.

Die Kreditkarten (Verbunde), an denen die Beschriftbarkeit mittels Lasers und die Schriftschärfe gestest wurde, waren folgendermaßen aufgebaut :

Die Folien aus den Beispielen 1, 2 und 5 stellten jeweils die Außenschicht (die Schutzfolien) dar bei Verbunden mit Papier als Kernschicht.

Die Folien aus den Beispielen 3, 4, 6, 7 und 8 stellten jeweils die Kernschicht dar bei Verbunden mit der Folie aus Beispiel 2 als Außenschicht.

Die Folie aus dem Vergleichsbeispiel 1 stellte die Kernschicht dar bei einem Verbund mit der Folie aus Vergleichsbeispiel 2 als Außenschicht.

Die Folie aus dem Vergleichsbeispiel 2 stellte die Außenschicht dar bei einem Verbund mit Papier als Kernschicht.

Im folgenden werden die in der Tabelle in Kurzform angegebenen Komponenten näher beschrieben :

$PVC^1$ ist ein Vinylchlorid-Homopolymerisat mit K-Wert 57,

$PVC^2$ ist ein Vinylchlorid-Homopolymerisat mit K-Wert 60,

$PVC^3$ ist ein Copolymerisat mit K-Wert 60 aus 90 Gew.-% Vinylchlorid und 10 Gew.-% Vinylacetat,

$PVC^4$ ist ein Vinylchlorid-Homopolymerisat mit K-Wert 54,

$CPE^1$ ist ein chloriertes Polyethylen mit einem Chlorgehalt von 39 Gew.-% und einem mittleren Molekulargewicht von 20 000,

$CPE^2$ ist ein chloriertes Polyethylen mit einem Chlorgehalt von 34 Gew.-% und einem mittleren Molekulargewicht von 45 000,

ABS ist ein Polymerisat aus 24 Gew.-% Acrylnitril, 48 Gew.-% Butadien und 28 Gew.-% Styrol,

MABS ist ein Polymerisat aus 18 Gew.-% Methylmethacrylat, 3 Gew.-% Acrylnitril, 42 Gew.% Butadien und 37 Gew.-% Styrol,

MBS ist ein Polymerisat aus 16 Gew.-% Methylmethacrylat, 66 Gew.-% Butadien und 18 Gew.-% Styrol,

PMMA ist ein Polymethylmethacrylat mit einer relativen Viskosität von 6,2 (Beispiele 1, 2, 5 und Vergleichsbeispiele 1 und 2) und von 4,1 (übrige Beispiele),

Cellulose : im Beispiel 8 wurde pulverisierte reine Cellulose mit einem durchschnittlichen Polymerisationsgrad von 950 und einer maximalen Teilchengröße von 0,08 mm eingesetzt, in den übrigen Beispielen eine solche mit einem durchschnittlichen Polymerisationsgrad von 400 und einer maximalen Teilchengröße von 0,04 mm.

(Siehe Tabelle Seite 6 f.)

**Tabelle**

| Beispiele | 1 | 2 | 3 | 4 | 5 | 6 | 7 | 8 | Vergleichsbeispiele | |
|---|---|---|---|---|---|---|---|---|---|---|
| | | | | | | | | | 1 | 2 |
| PVC[1] | 92 | – | 76 | – | – | 68 | – | – | 55,5 | – |
| PVC[2] | – | – | – | 25 | – | – | – | 32 | – | – |
| PVC[3] | – | 81 | – | 30 | 71 | – | 44,0 | 50 | 30 | 92 |
| PVC[4] | – | – | – | – | – | – | 28,5 | – | – | – |
| CPE[1] | – | – | – | 10 | – | – | – | – | – | – |
| CPE[2] | – | – | – | – | – | – | – | 8 | – | – |
| ABS | – | – | 10 | – | – | – | 12 | – | – | – |
| MABS | – | – | – | 10 | – | 15 | – | – | 13 | 6 |
| MBS | 5 | 13 | – | – | 18 | – | – | – | – | – |
| PMMA | 2 | 3 | 4 | 5 | 5 | 1 | 1,5 | 2 | 1,5 | 2 |
| Cellulose | 1 | 3 | 10 | 20 | 5 | 16 | 14 | 8 | – | – |
| Titandioxid | – | – | 4 | 6 | – | 10 | 12 | 5 | 6 | – |
| Hitzestabilisator | 2,1 | 2,5 | 1,8 | 1,5 | 2,1 | 2,0 | 1,8 | 1,8 | 1,8 | 2,1 |
| Gleitmittel | 0,6 | 0,8 | 0,4 | 1,0 | 0,6 | 0,4 | 0,4 | 0,5 | 0,5 | 0,6 |
| SUMME | 102,7 | 103,3 | 106,2 | 108,5 | 101,7 | 112,4 | 114,2 | 107,3 | 108,3 | 102,7 |
| Schriftschärfe | 3 | 3 | 3 | 3 | 3 | 3 | 3 | 3 | 1 | 2 |
| Kalandrierbarkeit | 3 | 3 | 3 | 2 | 3 | 2 | 3 | 3 | 3 | 3 |
| Folienoberfläche | 3 | 3 | 3 | 2 | 3 | 2 | 2 | 3 | 3 | 3 |
| Glanz (%) | 77/82 | 44/54 | 22/35 | 11/14 | 31/41 | 13/17 | 15/19 | 16/26 | 69/71 | 80/85 |
| Zugfestigkeit (N/mm²) 1/q | 58/54 | 47/43 | 51/47 | 40/32 | 47/39 | 48/36 | 52/43 | 57/51 | 44/43 | 51/47 |
| Reißdehnung (%) 1/q | 18/ 9 | 12/ 9 | 100/23 | 9/ 7 | 26/ 9 | 32/21 | 7/ 7 | 7/ 6 | 113/50 | 100/23 |

0 138 121

**Patentansprüche**

1. Formasse auf der Basis von Vinylchloridpolymerisaten zur Herstellung von Folien für die Bereitung von fälschungssicheren Wertpapieren, bestehend aus

A) 5 bis 20 Gew.-% Schlagzähmodifizierungsmittel für Vinylchloridpolymerisate, ausgewählt aus der Gruppe bestehend aus Acrylnitril-Butadien-Styrol-Polymeren, Methylmethacrylat-Butadien-Styrol-Polymeren, Methylmethacrylat-Acrylnitril-Butadien-Styrol-Polymeren und chloriertem Polyethylen

B) 0,5 bis 25 Gew.-% pulverisierter reiner Cellulose, die einen durchschnittlichen Polymerisationsgrad von 300 bis 1 000 besitzt, und deren Teilchen einen Durchmesser von maximal 0,09 mm aufweisen,

C) 1 bis 5 Gew.-% Polymethylmethacrylat, und einem

D) Vinylchloridhomopolymeren und/oder Vinylchloridcopolymeren mit mindestens 70 Gew.-% polymerisierten Vinylchlorid-Einheiten in einer solchen Menge, daß die Gewichtssumme aus A), B), C) und D) 100 Gew.-% ergibt, und zusätzlich

E) einer wirksamen Menge Gleitmittel und Wärmestabilisator für Vinylchlorid-Polymerisate.

2. Formmasse nach Anspruch 1, dadurch gekennzeichnet, daß die Menge an Cellulose 0,5 bis 5 Gew.-% beträgt.

3. Formmasse nach Anspruch 1, dadurch gekennzeichnet, daß die Menge an Cellulose 8 bis 25 Gew.-% beträgt, und daß sie F) weitere Füllstoffe, ausgewählt aus der Gruppe Titandioxid und Kreide in einer Menge von 1 bis 15 Gew.-%, bezogen auf das Gewicht von Vinylchloridpolymerisat, enthält.

4. Formmasse nach Anspruch 3, dadurch gekennzeichnet, daß die Menge an Cellulose 10 bis 16 Gew.-% beträgt.

5. Verfahren zur Herstellung von Kalanderfolien aus den Formmassen nach Anspruch 1 und 3, dadurch gekennzeichnet, daß die Formmasse bei einer Temperatur von 150 bis 170°C vorgeliert wird und das vorgelierte Material auf einem aus vier oder fünf Walzen bestehenden Kalander bei einer Temperatur von 190 bis 210°C zur Folie kalandriert wird, wobei die Walzen im einzelnen derart erhitzt sind, daß die erste und die letzte Walze etwa die gleiche Temperatur und die dazwischenliegenden Walzen um 5 bis 10°C höhere Temperaturen als die anderen beiden Walzen besitzen.

**Claims**

1. A molding composition based on vinyl chloride polymers, for the manufacture of films for the production of forgery-proof valuable documents, consisting of

A) 5 to 20 % by weight of an impact strength modifier for vinyl chloride polymers, selected from the group comprising acrylonitrile/butadiene/styrene polymers, methyl methacrylate/butadiene/styrene polymers, methyl methacrylate/acrylonitrile/butadiene/styrene polymers and chlorinated polyethylene,

B) 0.5 to 25 % by weight of powdered pure cellulose which has a mean degree of polymerization of 300 to 1 000 and the particles of which have a maximum diameter of 0.09 mm,

C) 1 to 5 % by weight of polymethyl methacrylate, and

D) a vinyl chloride homo- and/or a vinyl chloride copolymer having at least 70 % by weight of polymerized vinyl chloride units in such a quantity that the sum of the weights of A), B), C) and D) gives 100 % by weight, and additionally

E) an effective quantity of a lubricant and heat stabilizer for vinyl chloride polymers.

2. The molding composition as claimed in claim 1, in which the quantity of cellulose is 0.5 to 5 % by weight.

3. The molding composition as claimed in claim 1, in which the quantity of cellulose is 8 to 25 % by weight and which contains F) further fillers selected from the group comprising titanium dioxide and chalk in a quantity of 1 to 15 % by weight, relative to the weight of vinyl chloride polymer.

4. The molding composition as claimed in claim 3, in which the quantity of cellulose is 10 to 16 % by weight.

5. A process for the manufacture of calendered films from the molding compositions as claimed in claim 1, which comprises pre-gelling the molding composition at a temperature from 150 to 170°C, and calendering the pre-gelled material on a calender comprising four or five calender rolls at a temperature from 190 to 210°C to give a film, the rolls being heated individually in such a way that the first and last rolls have approximately the same temperature and the intervening rolls have temperatures which are 5 to 10°C higher than those of the other two rolls.

**Revendications**

1. Matière à mouler à base de polymères du chlorure de vinyle, pour la fabrication de feuilles destinées à la confection de documents précieux infalsifiables, matière à mouler qui est constituée :

A) de 5 à 20 % en poids d'agents modificateurs de résilience pour des polymères du chlorure de vinyle, agents pris dans l'ensemble constitué par les polymères acrylonitrile/butadiène/styrène, les polymères méthacrylate de méthyle/butadiène/styrène, les polymères méthacrylate de méthyle/acryloni-

trile/butadiène/styrène et le polyéthylène chloré,

B) de 0,5 à 25 % en poids d'une cellulose pure et pulvérisée qui a un degré de polymérisation moyen de 300 à 1 000 et dont les particules ont un diamètre d'au plus 0,09 mm,

C) de 1 à 5 % en poids de poly-(méthacrylate de méthyle),

D) d'un homopolymère du chlorure de vinyle et/ou d'un copolymère de chlorure de vinyle renfermant au moins 70 % en poids de motifs de chlorure de vinyle polymérisés, en une quantité telle que la somme des poids de A), B), C) et D) soit de 100 % en poids, et en plus

E) d'une quantité efficace d'un lubrifiant et d'un stabilisant à la chaleur pour des polymères du chlorure de vinyle.

2. Matière à mouler selon la revendication 1 caractérisée en ce que la quantité de cellulose est comprise entre 0,5 et 5 % en poids.

3. Matière à mouler selon la revendication 1 caractérisée en ce qu'elle contient la cellulose en une quantité comprise entre 8 et 25 % en poids et en ce qu'elle contient F) des charges supplémentaires prises dans l'ensemble constitué par le dioxyde de titane et la craie, en une quantité de 1 à 15 % en poids par rapport au poids du polymère du chlorure de vinyle.

4. Matière à mouler selon la revendication 3 caractérisée en ce que la quantité de cellulose est de 10 à 16 % en poids.

5. Procédé de fabrication de feuilles calandrées à partir de matières à mouler selon l'une des revendications 1 et 3, procédé caractérisé en ce qu'on prégélifie la matière à mouler à une température de 150 à 170°C et on calandre la matière prégélifiée sur une calandre à 4 ou 5 cylindres, à une température de 190 à 210°C, de manière à obtenir la feuille, les divers cylindres étant chauffés de telle façon que le premier et le dernier soient à peu près à la même température et que les cylindres intermédiaires soient à des températures supérieures de 5 à 10°C à celle des deux autres cylindres.